# EUROPEAN PATENT APPLICATION

(11) **EP 4 843 958 A1**
(43) Date of publication of application: **25.11.2026**
(21) Application number: 26173643.3
(22) Date of filing: 21.04.2026
(51) Int. Cl.: C01G 53/504, C01G 53/506, H01M 4/525

(54) **POSITIVE ELECTRODE ACTIVE MATERIAL, POSITIVE ELECTRODE PLATE, AND NON-AQUEOUS ELECTROLYTE SECONDARY BATTERY**

(30) Priority: 23.05.2025 JP 2025086235
(71) Applicant: Prime Planet Energy & Solutions, Inc., Chuo-ku, Tokyo 103-0022 (JP)
(72) Inventor: HANAZAKI, Ryo, Tokyo 103-0022 (JP)
(74) Representative: Kuhnen & Wacker Patent- und Rechtsanwaltsbüro PartG mbB

(57) **Abstract**

Provided is a positive electrode active material (60) comprising a first active material, wherein the first active material is in a form of secondary particles (10) each consisting of a plurality of primary particles (10P) aggregated together, the first active material is a lithium-(transition metal)-containing composite oxide represented by a formula (1), and a ratio of the number of boundaries between the primary particles (10P) adjacent to each other in each secondary particle (10) at which crystal misorientation is 60° or more, relative to the number of the primary particles (10P) in the secondary particle (10), is 0.5 or less.

## Description

### CROSS REFERENCE TO RELATED APPLICATIONS

This nonprovisional application is based on Japanese Patent Application No. 2025-086235 filed on May 23, 2025, with the Japan Patent Office, the entire contents of which are hereby incorporated by reference.

### BACKGROUND OF THE INVENTION

### Field of the Invention

The present disclosure relates to a positive electrode active material, and it also relates to a positive electrode plate as well as a non-aqueous electrolyte secondary battery including a positive electrode active material.

### Description of the Background Art

Japanese Patent Laying-Open No. 2024-160551 discloses a positive electrode active material including secondary particles each consisting of primary particles aggregated together, in which the nickel content rate is 75 mol% or more relative to the total of metallic elements except lithium and the aspect ratio is 1.9 or more.

### SUMMARY OF THE INVENTION

In a non-aqueous electrolyte secondary battery that includes a positive electrode plate including a positive electrode active material in which the nickel content rate relative to the total of metallic elements except lithium is high (for example, 60 mol% or more), the volume of the positive electrode active material tends to expand and shrink to a great extent during charging and discharging. As a result, as the charge-discharge cycle is repeated, cracks tend to be formed inside the positive electrode active material particles and degradation tends to proceed.

An object of the present disclosure is to provide a positive electrode active material that has a nickel content rate of 60 mol% or more and that is capable of enhancing charge-discharge cycling performance, as well as a positive electrode plate and a non-aqueous electrolyte secondary battery including the same.
[1] A positive electrode active material comprising:
   a first active material, wherein
   the first active material includes secondary particles each consisting of a plurality of primary particles aggregated together,
   the first active material is a lithium-(transition metal) composite oxide represented by a formula (1):

      LiₐNiₓCo_{y}Mn_{z}M_{(1-x-y-z)}O₂ (1)

      where
      x, y, z, and a satisfy 0.6≤x≤1.0, 0≤y≤0.3, 0≤z≤0.3, and 0.90≤a/(x+y+z)≤1.25, and
      M is one or more elements selected from the group consisting of Mg, Ca, Al, Ti, V, Cr, Zr, Nb, Mo, Hf, Ta, and W, and
   a ratio of the number of boundaries between the primary particles adjacent to each other in each secondary particle at which crystal misorientation is 60° or more, relative to the number of the primary particles in the secondary particle, is 0.5 or less.
[2] The positive electrode active material according to [1], wherein in the formula (1), x satisfies 0.7≤x≤1.0.
[3] The positive electrode active material according to [1], wherein in the formula (1), x satisfies 0.9≤x≤1.0.
[4] The positive electrode active material according to any one of [1] to [3], wherein in the formula (1), x, y, z, and a satisfy 1.06≤a/(x+y+z)≤1.25.
[5] The positive electrode active material according to any one of [1] to [3], wherein in the formula (1), x, y, z, and a satisfy 1.06≤a/(x+y+z)≤1.15.
[6] The positive electrode active material according to any one of [1] to [5], wherein the secondary particle has a porosity of 2 to 8%.
[7] The positive electrode active material according to any one of [1] to [6], wherein the secondary particle has a covering layer including LiBO₂.
[8] The positive electrode active material according to any one of [1] to [7], wherein the number of the primary particles in each secondary particle is 10 or more.
[9] The positive electrode active material according to any one of [1] to [8], wherein the first active material includes a particle group formed of the secondary particles.
[10] The positive electrode active material according to any one of [1] to [9], wherein the primary particle has an aspect ratio of 1.9 or more.
[11] The positive electrode active material according to any one of [1] to [10], wherein the primary particles have an average particle size of 0.1 to 2.5 µm.
[12] The positive electrode active material according to any one of [1] to [11], wherein the first active material has an average particle size D50 of 2 to 50 µm.
[13] A positive electrode plate comprising a positive electrode active material layer including the positive electrode active material according to any one of [1] to [12].
[14] A non-aqueous electrolyte secondary battery comprising the positive electrode plate according to [13].

The foregoing and other objects, features, aspects and advantages of the present invention, when taken in conjunction with the accompanying drawings will become more apparent from the following detailed description of the present invention.

### BRIEF DESCRIPTION OF THE DRAWINGS

Fig. 1 is a schematic external view illustrating a secondary particle.
Fig. 2 is a schematic cross-sectional view illustrating a secondary particle.
Fig. 3 is a graph showing volume changes of a non-aqueous electrolyte secondary battery before and after charging.
Fig. 4 is a schematic cross-sectional view illustrating a plurality of primary particles, for explaining boundaries between primary particles adjacent to each other.
Fig. 5 is an IPF map of crystal orientations of primary particles in a cross section of a secondary particle.
Fig. 6 is an IPF map for explaining crystal misorientation line analysis.
Fig. 7 is a graph plotting crystal misorientations, overlaid on a part of an IPF map.
Fig. 8 is a schematic flowchart illustrating a method of producing a positive electrode active material.
Fig. 9 is a schematic cross-sectional view illustrating a positive electrode plate.
Fig. 10 is a schematic cross-sectional view illustrating an example of a non-aqueous electrolyte secondary battery.
Fig. 11 is a schematic view illustrating an example of an electrode assembly.

### DESCRIPTION OF THE PREFERRED EMBODIMENTS

### <Positive Electrode Active Material>

A positive electrode active material according to the present disclosure is a positive electrode active material for use in a positive electrode plate of a non-aqueous electrolyte secondary battery. The non-aqueous electrolyte secondary battery may be a lithium-ion secondary battery, for example.

The positive electrode active material includes a first active material. The first active material is a substance capable of reversibly occluding and releasing charge carriers. The first active material is a lithium-(transition metal) composite oxide.

The lithium-(transition metal) composite oxide has a layered structure, and it includes lithium (Li) and nickel (Ni). In the lithium-(transition metal) composite oxide, the ratio of the total number of moles of Ni to the total number of moles of metallic elements except Li (hereinafter also referred to as the Ni content rate) is 60 mol% or more.

In the lithium-(transition metal) composite oxide, from the viewpoint of high volumetric energy density of the non-aqueous electrolyte secondary battery, the Ni content rate is preferably 70 mol% or more, more preferably 80 mol% or more, further preferably 90 mol% or more. On the other hand, from the viewpoint of high stability, the Ni content rate is preferably 95 mol% or less.

The lithium-(transition metal) composite oxide may be a lithium-nickel-manganese-based composite oxide, a lithium-nickel-cobalt-manganese-based composite oxide, a lithium-nickel-cobalt-aluminum-based composite oxide, a lithium-iron-nickel-manganese-based composite oxide, and/or the like, for example. One type of them may be used, or two or more types may be used in combination. It is possible to check whether the particles of the lithium-(transition metal) composite oxide have a layered structure (in other words, a layered crystal structure) by X-ray diffraction and/or the like, for example.

The lithium-(transition metal) composite oxide has a composition represented by a formula (1):

LiₐNiₓCo_{y}Mn_{z}M_{(1-x-y-z)}O₂ (1)

[in the formula (1), x, y, z, and a satisfy 0.6≤x≤1.0, 0≤y≤0.3, 0≤z≤0.3, and 0.90≤a/(x+y+z)≤1.25, and
M is one or more elements selected from the group consisting of Mg, Ca, Al, Ti, V, Cr, Zr, Nb, Mo, Hf, Ta, and W].

In the formula (1), x preferably satisfies 0.7≤x≤1.0, more preferably 0.8≤x≤1.0, further preferably 0.9≤x≤1.0, from the viewpoint of energy density and charge-discharge cycling performance. y preferably satisfies 0.05≤y≤0.25, more preferably 0.1≤y≤0.25, further preferably 0.1≤y≤0.2, from the viewpoint of charge-discharge cycling performance. z preferably satisfies 0.05≤z≤0.25, more preferably 0.1≤z≤0.2, from the viewpoint of charge-discharge cycling performance. x, y, and z preferably satisfy x+y+z=1. "x+y+z=1" is not limited to the sum of x+y+z being 1, but it also encompasses a case where the sum is substantially regarded as 1 as long as the effect of the technique disclosed herein can be achieved; typically the sum may be x+y+z=0.95 to 1.1, and preferably the sum may be x+y+z=0.99 to 1.05.

In the formula (1), "a/(x+y+z)" corresponds to the ratio of the total number of moles of lithium to the total number of moles of Ni, Co, and Mn (hereinafter also referred to as the Li/Me ratio). When the Ni content rate in the lithium-(transition metal) composite oxide is 70 mol% or more, thermal stability of the positive electrode active material tends to be impaired. With the Li/Me ratio being from 1.06 to 1.25, even when the Ni content rate is 70 mol% or more, stability of the crystal structure at a high SOC and a high temperature tends to be enhanced, and as a result, a highly thermostable positive electrode active material in which oxygen release from the positive electrode active material is reduced tends to be obtained. For this reason, it is preferable that x, y, z, and a satisfy 1.06≤a/(x+y+z)≤1.25, more preferably 1.06≤a/(x+y+z)≤1.15. It should be noted that in a case where the positive electrode active material includes a covering layer described below and the covering layer includes a Li-containing compound, and also in a case where a Li-containing compound (for example, LiOH and/or Li₂CO₃) is present on the surface of the positive electrode active material, "a" in the formula (1) representing the molar ratio of Li includes the molar ratio of Li in the Li-containing compound that is present in the covering layer and on the surface of the positive electrode active material. Moreover, when the positive electrode active material layer includes a covering layer described below and the covering layer includes a tungsten compound, "1-x-y-z" in the formula (1) representing the molar ratio of M includes the molar ratio of tungsten in the tungsten compound.

In some preferable aspects, in addition to the covering layer described below, the lithium-(transition metal) composite oxide preferably includes W. In other words, the lithium-(transition metal) composite oxide is preferably doped with W, which is an additive element. With this, the layered structure of the lithium-(transition metal) composite oxide is more stable and thereby the initial resistance is even more improved, and also, elution of Mn into non-aqueous electrolyte is reduced and thereby a rise of resistance during storage is reduced even more effectively. At the time to dope W as an additive element into the lithium-(transition metal) composite oxide (to form solid solution), the amount of dope relative to the total of transition metal elements in the lithium-(transition metal) composite oxide except W is preferably from 0.1 to 0.5 mol%, more preferably from 0.1 to 0.3 mol%.

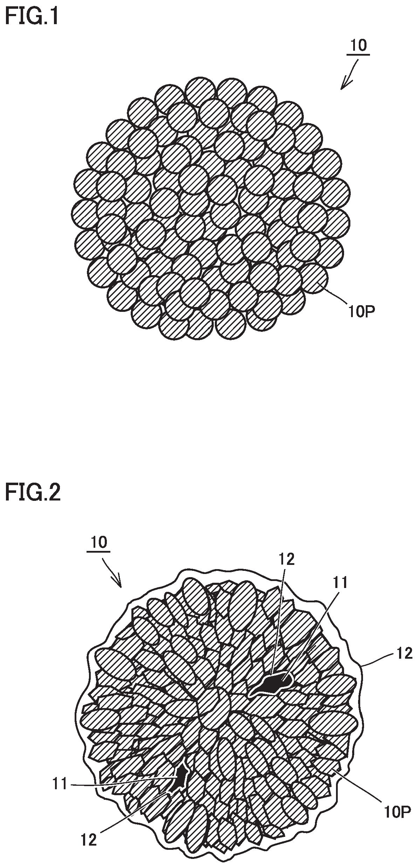

The first active material includes secondary particles each consisting of a plurality of primary particles aggregated together. Preferably, the first active material includes a particle group formed of a plurality of secondary particles. When the first active material includes a particle group formed of a plurality of secondary particles, the number of secondary particles in the particle group may be 2 or more, for example, and it is preferably 10 or more, more preferably 30 or more, further preferably 50 or more. The upper limit to the number of secondary particles in the particle group is not particularly limited. Referring to Fig. 1 and Fig. 2, the secondary particle may be a secondary particle 10 consisting of a plurality of primary particles 10p aggregated together by the action of physical or chemical bonding force. In Fig. 1, all the primary particles 10p are illustrated as spherical (round) particles for the sake of convenience, but the shape of primary particles 10p is not particularly limited and, for example, it may be rod-like, plate-like, disk-like, elliptical, rectangular parallelepiped-like, cubic, polyhedral, a combination of these, and the like. The cross-sectional profile of primary particle 10p may be long, for example, and it may be circular, tetragonal, elliptical, polygonal, linear, a combination of these, and the like.

The number of primary particles 10p constituting each secondary particle 10 is 10 or more, preferably 30 or more, more preferably 50 or more. The number of primary particles 10p is not particularly limited, and, for example, it may be 100,000 or less, or 60,000 or less, or 40,000 or less, or 20,000 or less. It should be noted that "primary particle" herein refers to the smallest particle unit of the positive electrode active material, and, for example, it refers to the smallest unit identified from the external geometric form observed under a scanning electron microscope (SEM).

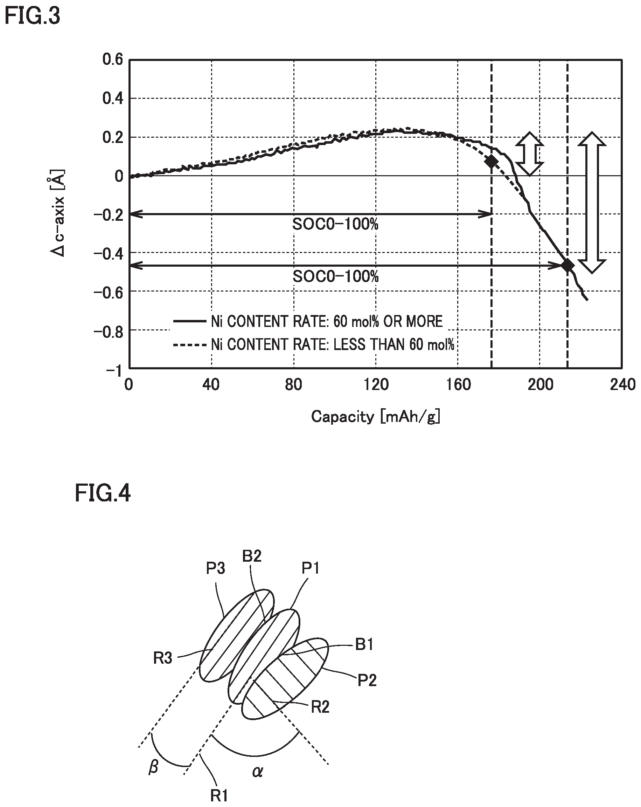

In the first active material, the ratio (hereinafter also referred to as the first ratio) of the number of boundaries between primary particles adjacent to each other in a secondary particle at which crystal misorientation is 60° or more, relative to the number of primary particles in the secondary particle, is 0.50 or less. Fig. 3 is a graph showing volume changes (c-axis length change) of a non-aqueous electrolyte secondary battery having a nickel content rate of 60 mol% or more and a non-aqueous electrolyte secondary battery having a nickel content rate of less than 60 mol%, before and after charging. As seen in Fig. 3, when the nickel content rate is 60 mol% or more, the volume after charging tends to be less than before charging, and the burden imposed by expansion and shrinkage of the volume of the positive electrode active material particles during charging and discharging may be great. However, in the case where the first ratio of the first active material is within the above-mentioned range, surprisingly and contrary to the expectation that great crystal orientation of the primary particles can result in great stress inside the particles, it is found that even when the nickel content rate of the first active material is 60 mol% or more, the directions of expansion and shrinkage of the volume of the positive electrode active material during charging and discharging tend to be controlled and, as a result, stress inside the secondary particle tends to be decreased at the time of evaluation of charge-discharge cycling performance and thereby breakage of the particles tends to be reduced. This is in agreement with the results of simulation of stress produced inside the secondary particle due to expansion and shrinkage of the volume of primary particles, where the stress burden caused by the expansion and shrinkage of the volume was small in a secondary particle in which the crystal orientation of its primary particles was controlled, as compared to a secondary particle in which the crystal orientation of its primary particles was not controlled. It should be noted that when the first active material includes a plurality of secondary particles, the first ratio is the average value of the first ratios of the secondary particles.

The crystal misorientation between primary particles adjacent to each other in a secondary particle refers to, with reference to Fig. 4, an angle α between a crystal orientation R1 of a primary particle P1 and a crystal orientation R2 of a primary particle P2, where primary particle P1 and primary particle P2 are adjacent to each other in one secondary particle. A boundary between primary particles adjacent to each other in a secondary particle at which crystal misorientation is 60° or more refers to, with reference to Fig. 4, a boundary B1 at which the crystal misorientation (the angle α) between crystal orientation R1 of primary particle P1 and crystal orientation R2 of primary particle P2 is 60° or more. Here, with reference to Fig. 4, an angle β between crystal orientation R1 of primary particle P1 and a crystal orientation R3 of a primary particle P3 (primary particle P1 and primary particle P3 are adjacent to each other) is less than 60°, and therefore a boundary B2 between primary particle P1 and primary particle P3 is not regarded as a boundary between primary particles adjacent to each other in a secondary particle at which crystal misorientation is 60° or more. Similarly, in a case where two or more primary particles are positioned adjacent to each other as a result of two or more secondary particles being positioned in contact with one another, even if the crystal misorientation between these primary particles is 60° or more, the boundary is not regarded as a boundary between primary particles adjacent to each other in a secondary particle at which crystal misorientation is 60° or more.

Specifically, the first ratio can be determined by the procedures (1) to (4) described below.
(1) By electron backscatter diffraction (EBSD) analysis, an inverse pole figure (IPF) map of crystal orientations of primary particles in at least one secondary particle cross section is obtained.
(2) In the IPF map, a secondary particle cross section having a cross-sectional diameter the same as or close to the average particle size D50 of the first active material is selected, and this secondary particle cross section is divided by ten lines into equal parts, followed by crystal misorientation line analysis to analyze crystal orientations of the primary particles on each line as well as the number of the primary particles. The cross-sectional diameter of the secondary particle that is determined to be the same as or close to the average particle size D50 of the first active material is preferably 1 µm more than or less than the average particle size D50 of the first active material.
(3) By crystal misorientation line analysis, the total number Xs of boundaries between primary particles adjacent to each other on the ten lines at which crystal misorientation is 60° or more as well as the total number Ys of the primary particles on the ten lines are determined.
(4) Xs is divided by Ys to determine the ratio Zs of Xs to Ys, which is regarded as the first ratio. In the case where the first active material includes a particle group formed of a plurality of secondary particles, the ratio Zs can be determined for each of the secondary particles by the above-mentioned procedures (1) to (3), and all the ratios Zs can be averaged, which is regarded as the first ratio.

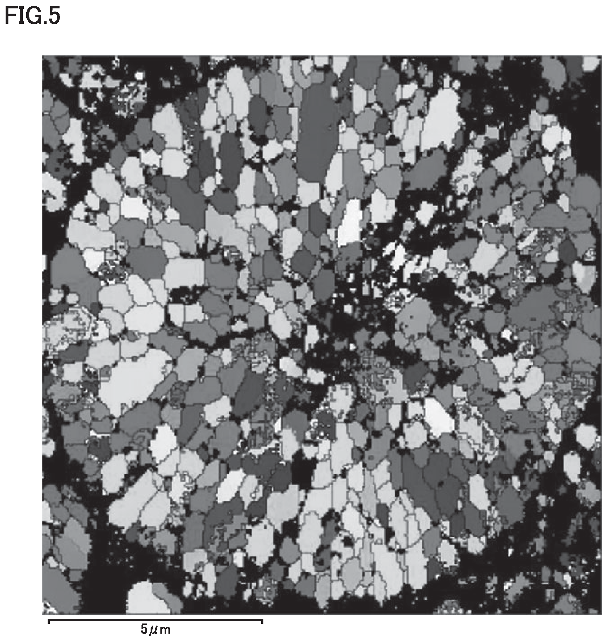

In the procedure (1), the secondary particle cross section can be prepared from powder of the first active material by cross section polisher (CP) machining. The EBSD analysis can be carried out with a scanning electron microscope and an energy dispersive X-ray spectrometer (SEM-EDS). The IPF map can be made from a secondary particle cross-sectional image obtained by SEM-EDS at 5000 times, for example. Fig. 5 is an IPF map of crystal orientations of primary particles in a secondary particle cross section. In the IPF map, crystal orientations are color-coded, and boundaries at which there is a difference in crystal orientations are shown. As the EBSD analysis, cross-sectional examination of a secondary particle representative of the first active material is carried out at a position near the center, and from the viewpoint of enhancing precision of the measurement of the first ratio, the analysis is carried out for a selected secondary particle cross section in the IPF map that has a cross-sectional diameter the same as or close to the average particle size D50 of the first active material. The average particle size D50 of the first active material can be determined by using powder of the first active material before it is used for preparing the positive electrode active material layer, with the use of a laser diffraction and scattering particle size distribution measuring apparatus and/or the like. The average particle size D50 of the first active material can also be determined by immersing the positive electrode plate in NMP solution for sonication and then collecting the first active material to measure the particle size distribution. In the case where the positive electrode active material includes two or more types of active materials having different average particle sizes D50, particle size distribution measurement can be carried out after the positive electrode active materials are fractionated. Alternatively, it is possible to examine the surface of the positive electrode plate with an SEM and perform image analysis of secondary particles thus examined to calculate the particle sizes. In the case where the positive electrode active material includes two or more types of active materials having different average particle sizes D50, the analysis can be carried out after sorting the particles in terms of the average particle size D50 by particle size filtering in the image analysis.

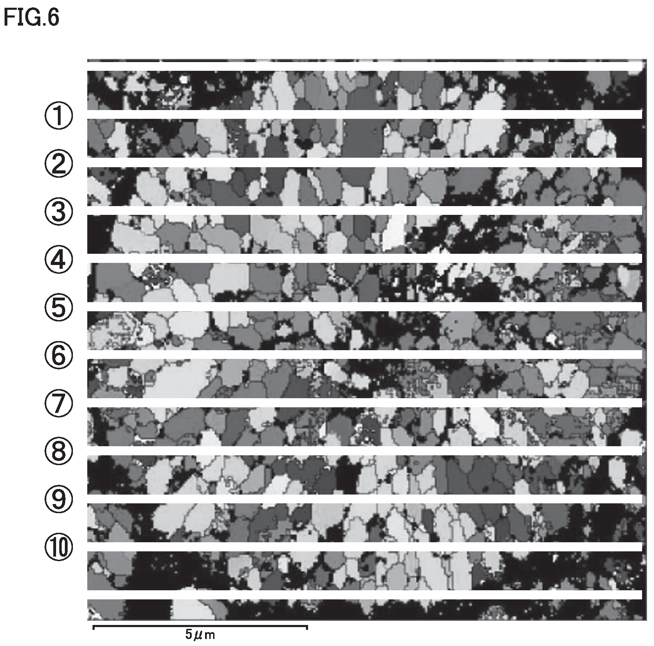

In the procedure (2), the IPF map of crystal orientations of primary particles in the secondary particle cross section obtained by the EBSD analysis is subjected to crystal misorientation line analysis. With reference to Fig. 6, in the crystal misorientation line analysis, in the IPF map of crystal orientations of primary particles in the secondary particle cross section obtained by the EBSD analysis, the secondary particle is divided by ten lines into equal parts, and crystal orientations of primary particles on each line and the number of the primary particles are analyzed. These ten lines are parallel to each other, and the direction of each line is not particularly limited and may go in any direction. Performing the misorientation line analysis by dividing the secondary particle by ten lines into eleven equal parts in the IPF map is conceivable to be advantageous from the viewpoint of precision of the measurement of the first ratio in consideration of the average particle size of primary particles of the first positive electrode active material as well as the average particle size D50 of secondary particles.

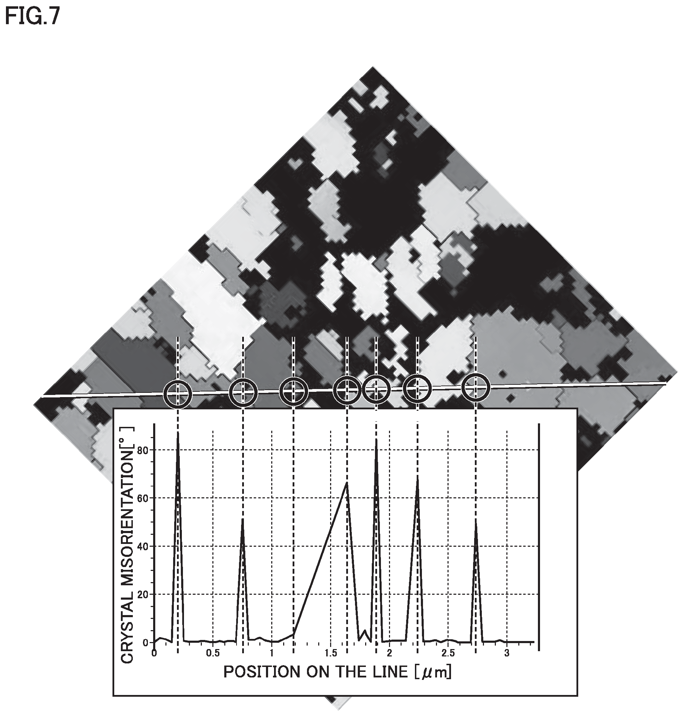

In the procedure (3), based on the results of the misorientation line analysis, in the IPF map of crystal orientations of primary particles in the secondary particle cross section obtained by the EBSD analysis, the total number Xs of boundaries between primary particles adjacent to each other on the ten lines dividing the secondary particle into eleven equal parts at which crystal misorientation is 60° or more as well as the total number Ys of the primary particles on the ten lines are determined. By setting the crystal misorientation for the boundary at 60°, it becomes easier to identify differences at the time of evaluation of charge-discharge cycling performance. Fig. 7 is a graph plotting crystal misorientations on one line drawn in an IPF map, overlaid on a part of an image of the IPF map corresponding to the graph.

In the procedure (4), Xs is divided by Ys to determine the ratio Zs of Xs to Ys, which is regarded as the first ratio. In the procedures (1) to (3) mentioned above, since the EBSD analysis is carried out for a secondary particle cross section having a cross-sectional diameter equal to the average particle size D50 of the first active material, and the secondary particle cross section is divided by ten lines into eleven equal parts to determine the number of primary particles on the ten lines as well as the number of boundaries between primary particles adjacent to each other on the ten lines at which crystal misorientation is 60° or more, the ratio Zs is regarded as equivalent to the first ratio, which is the ratio of the total number of boundaries between primary particles adjacent to each other in the secondary particle at which crystal misorientation is 60° or more relative to the total number of the primary particles in the secondary particle, and, thus, the ratio Zs can be regarded as the first ratio. When the first active material includes a particle group formed of a plurality of secondary particles, it is possible to determine the ratio Zs of the secondary particles by the above-mentioned procedures (1) to (3) and determine the average value of the ratios Zs of the secondary particles as the first ratio. Preferably, the first ratio is the average value of the ratios Zs of 10 or more secondary particles, more preferably 30 or more secondary particles. In the case where the first ratio is the average value of the ratios Zs of a plurality of secondary particles, the average value of the ratios Zs can be regarded as the first ratio for a case where the first active material includes a plurality of secondary particles.

The upper limit value to the average value of the first ratio may be 0.49 or less, or 0.48 or less, for example. The lower limit to the average value of the first ratio may be 0 or more, or 0.20 or more, or 0.30 or more, or 0.40 or more, for example.

The first ratio can be controlled by adjusting the conditions of production of the first active material. Specifically, the NH₃ concentration, the pH, the rates of supplying an alkaline compound and metallic elements, the reaction duration, the reaction temperature, and the stirring rate in a reaction liquid preparation step and a crystallization step of a positive electrode active material precursor production step, the atmosphere in the crystallization step, and the like may be adjusted. In addition, calcination conditions in a positive electrode active material production step may also be adjusted, such as, for example, the calcination temperature and the calcination duration in two-step calcination (for example, the calcination temperature, the calcination duration, and the like in the second calcination). The method of producing the first active material will be described below.

Referring to Fig. 2, primary particle 10p may be long. The aspect ratio of primary particle 10p (the ratio of the longer diameter to the shorter diameter) may be 1.9 or more, for example. With this, initial resistance tends to be improved. The longer diameter of primary particle 10p extends substantially parallel to the direction (which is the a axis) orthogonal to the stacking direction (the c axis) of the layered lithium-(transition metal) composite oxide. The shorter diameter of primary particle 10p extends substantially parallel to the stacking direction (the c axis). The upper limit to the aspect ratio of primary particle 10p is not particularly limited, and, for example, it is preferably 2.5 or less, more preferably 2.2 or less.

It should be noted that the aspect ratio of primary particle 10p herein refers to the ratio of the longer diameter of primary particle 10p, which is a lithium-(transition metal) composite oxide, to the shorter diameter thereof. The aspect ratio of primary particle 10p refers to the average value of the ratios of the longer diameter to the shorter diameter for a plurality of primary particles 10p that are identified and freely selected in a cross-sectional SEM image of the lithium-(transition metal) composite oxide. The number of these primary particles 10p may be 20 or more, for example. Specifically, the aspect ratio of primary particle 10p can be determined in the following manner. A cross-sectional examination sample of the lithium-(transition metal) composite oxide is prepared by CP processing, for example. Then, with an SEM, an SEM image of the cross-sectional examination sample of the lithium-(transition metal) composite oxide is obtained. Subsequently, with image analysis particle size distribution measurement software (for example, "Mac-View"), based on the longer diameters and the shorter diameters of a plurality of primary particles 10p freely selected in the SEM image, the aspect ratios (the ratios of the longer diameter to the shorter diameter) are calculated, and the arithmetic mean value thereof can be regarded as the aspect ratio.

Referring to Fig. 2, in secondary particle 10, primary particles 10p may extend from the center of the secondary particle toward the periphery (surface) of the secondary particle (in a radial arrangement). It is possible that one end of the long side of primary particle 10p is positioned closer to the periphery of the secondary particle and the other end is positioned closer to the center of the secondary particle. It is also possible that the a axis of primary particle 10p extends from the center of the secondary particle toward the periphery of the secondary particle.

The average particle size of primary particles 10p may be from 0.05 to 2.5 µm, for example, and from the viewpoint of charge-discharge cycling performance, it is preferably from 0.1 to 2.3 µm, more preferably from 0.2 to 2.1 µm. It should be noted that the average particle size of primary particles 10p is the average value of particle sizes measured for ten primary particles 10p on the surface of a secondary particle examined with an SEM.

The average particle size D50 of the first active material or the particle group formed of a plurality of secondary particles may be from 2 µm to 50 µm, for example, and from the viewpoint of charge-discharge cycling performance, it is preferably from 5 µm to 30 µm, more preferably from 10 µm to 20 µm.

It should be noted that the average particle size D50 herein refers to the median diameter (D50), and it means a particle size in volume-based particle size distribution based on laser diffraction and scattering at which cumulative frequency accumulated from the small particle size side reaches 50 volume%. Accordingly, the average particle size D50 of the first active material or the particle group formed of a plurality of secondary particles can be determined with the use of a laser diffraction and scattering particle size distribution measuring apparatus and/or the like.

A secondary particle may have a so-called solid structure in which primary particles are simply aggregated to form the secondary particle. However, this is not limitative, and as illustrated in Fig. 2, secondary particle 10 may have pores 11 which are gaps between primary particles 10p aggregated in secondary particle 10. Pores 11 may be or may not be open. When pore 11 is open, one pore 11 may have two or more openings. Pore 11 can be a space inside secondary particle 10 when viewed in a cross section, surrounded by a plurality of primary particles 10p.

When a secondary particle has a pore, the porosity is preferably from 2 to 8% from the viewpoint of charge-discharge cycling performance. The porosity of a secondary particle may be 2% or more, or 3% or more, or 5% or more, for example. With the porosity of a secondary particle being a certain value or more, initial resistance of the non-aqueous electrolyte secondary battery can be reduced. Moreover, pores can be properly ensured inside a secondary particle. Moreover, when a secondary particle has a covering layer described below, the covering layer can be provided all over, even on the interface between adjacent primary particles and the center of the secondary particle. In contrast, when the porosity of the secondary particle is too high (typically, when the porosity is more than 8%), resistance rises to a great extent during storage. Therefore, the porosity of the secondary particle is 8% or less, for example, and it may be 7% or less, or 6% or less. Herein, as for the porosity of the secondary particle, the average value can be calculated by measuring the porosities of a plurality of secondary particles freely selected in an SEM image of secondary particle cross sections. In the measurement of the porosity of the secondary particle, the number of the secondary particles may be 20 or more, for example. Firstly, secondary particle cross section examination samples are prepared by CP processing and/or the like. Then, with an SEM, an SEM image of each cross-sectional examination sample is obtained. From the SEM image thus obtained, with the use of image analysis software (for example, ImageJ), the total area of the secondary particle and the total area of all the pores in the secondary particle are determined. Subsequently, the porosity is determined by the following equation (i) and the average value is calculated.$Porosity \left(%\right) = \left(\left(Total area of all pores\right)/\left(Total area of secondary particles\right)\right) \times 100$ (i)

The porosity of a secondary particle can be adjusted by, for example, changing the synthesis conditions of crystallization-based synthesis of a hydroxide which is a positive electrode active material precursor. Specifically, in the crystallization, a raw material aqueous solution containing metallic elements except lithium and a pH-adjusting liquid are added to the reaction liquid to synthesize the hydroxide. By changing the pH value of the reaction liquid at this time as well as the stirring rate, it is possible to adjust the porosity of the hydroxide. By mixing the hydroxide with a lithium-source compound (for example, lithium hydroxide and/or the like) and calcining the resultant, it is possible to obtain a lithium-(transition metal) composite oxide in the form of secondary particles that has its porosity adjusted. Moreover, the adjustment can be made by adjusting the temperature of calcination at the time of calcination in the positive electrode active material production step, such as, for example, the temperature of the second calcination.

Referring to Fig. 2, secondary particle 10 can comprise a covering layer 12 on at least part of the surface. Covering layer 12 may be provided on secondary particle 10 by physical and/or chemical bonding. The secondary particle may not necessarily have a covering layer. The covering layer can be formed by mixing the secondary particle with a material of the covering layer and calcining the resultant.

Preferably, covering layer 12 includes a boron compound. With a boron compound provided in the form of covering layer 12 on the surface of secondary particle 10, degradation of primary particles 10p tends to be reduced and cycle endurance properties tend to be enhanced. In addition, elution of Mn from secondary particle 10 into the non-aqueous electrolyte can be reduced and a rise of resistance during storage can be reduced. Moreover, in the first active material, covering layer 12 enhances the bonding force between primary particles 10p. As a result, stress caused by expansion and shrinkage can be reduced and breakage of secondary particle 10 can be reduced. Also from this viewpoint, a rise of resistance during storage can be properly reduced. The boron compound is preferably an oxide containing boron, or an oxide containing boron and lithium, for example, and particularly preferably it is lithium borate. Examples of the boron compound include B₂O₂, B₂O₃, B₄O₃, B₄O₅, LiBO₂, Li₃B₇O₁₂, Li₆B₄O₉, Li₃B₁₁O₁₈, Li₂B₄O₇, Li₃BO₃, LiB(OH)₄, and the like. Among these, from the viewpoint of charge-discharge cycling performance, LiBO₂ is preferable. From the viewpoint of charge-discharge cycling performance, secondary particle 10 preferably has covering layer 12 including LiBO₂. The ratio of the total number of moles of boron (B) to the total number of moles of metallic elements except Li in the first active material (hereinafter also referred to as the B content rate) may be from 0.5 to 2.0 mol%, for example, and from the viewpoint of charge-discharge cycling performance, it is preferably from 0.7 to 1.5 mol%.

Covering layer 12 can further include aluminum oxide (Al₂O₃) in addition to the boron compound. Aluminum oxide functions to trap hydrogen fluoride gas (hydrofluoric acid) that is produced due to degradation of non-aqueous electrolyte. As a result, Mn produced by the reaction of the first active material (the lithium-(transition metal) composite oxide) with the hydrogen fluoride gas can be inhibited from eluting into the non-aqueous electrolyte. In the case where not only the boron compound but also aluminum oxide is further included in covering layer 12 placed on the surface of secondary particle 10, charge-discharge cycling performance can be enhanced even more. The ratio of the total number of moles of aluminum (Al) to the total number of moles of metallic elements except Li in the first active material (hereinafter also referred to as the Al content rate) may be from 0.1 to 0.5 mol%, for example, and from the viewpoint of charge-discharge cycling performance, it is preferably from 0.3 to 0.5 mol%.

Covering layer 12 may further include a tungsten compound. When covering layer 12 includes a tungsten compound, electronic resistance of the surface of the secondary particle tends to increase and a short-circuit current in thermal stability evaluation tends to be reduced, which means thermal stability tends to be enhanced, and also bonding force between primary particles 10p tends to increase. As a result, stress caused by expansion and shrinkage tends to be reduced and thereby breakage of the secondary particle tends to be reduced, which tends to enhance charge-discharge cycling performance.

From the viewpoint of thermal stability and charge-discharge cycling performance, the tungsten compound preferably includes at least one selected from the group consisting of CoWO₄, MnWO₄, and LiWO₄.

The thickness of covering layer 12 may be from 50 to 200 nm, for example, and from the viewpoint of thermal stability and cycle endurance properties, it is preferably from 60 to 190 nm, more preferably from 70 to 180 nm. The thickness of covering layer 12 can be measured by XPS (X-ray Photoelectron Spectroscopy) depth analysis, or by examination of a cross section under a transmission electron microscope (TEM), for example.

From the viewpoint of charge-discharge cycling performance, covering layer 12 is preferably present inside secondary particle 10, in addition to on the surface of secondary particle 10 or instead of on the surface of secondary particle 10. Specifically, covering layer 12 is preferably present on the surface of primary particle 10p inside secondary particle 10. When secondary particle 10 has pore 11, covering layer 12 tends to be formed inside secondary particle 10. Moreover, covering layer 12 may be present at the interface between adjacent primary particles 10p. When covering layer 12 is present on the surface of primary particle 10p constituting pore 11 of secondary particle 10, covering layer 12 is presumably present between adjacent primary particles 10p. The amount of covering layer 12 present inside secondary particle 10 may be more than or less than the amount of covering layer 12 present on the surface of the secondary particle.

The covering rate of secondary particle 10 with covering layer 12 may be 60% or more, for example, and it may be 100% or less, or 95% or less. The presence of covering layer 12 on the surface of secondary particle 10, as well as the proportion of the part covered with covering layer 12 (the covering rate) can be checked based on, for example, a boron covering rate obtained by XPS analysis performed on secondary particle 10 when covering layer 12 includes a boron compound. The boron covering rate (%) can be determined by firstly performing quantitative assessment on peaks of boron (B): B1s, nickel (Ni): Ni2p3, cobalt (Co): Co2p3, and manganese (Mn): Mn2p1 by XPS analysis and then performing calculation by the following equation.$Boron covering rate \left(%\right) = B / \left(B+Ni+Co+Mn\right)$

Moreover, the covering rate of an active material including a secondary particle having a porosity of 0% can be compared to the covering rate value of an active material including a secondary particle with pores, and when the numerical value is smaller, it can indicate that a covering layer is formed inside the secondary particle, namely at an interface between adjacent primary particles, and protection of primary particles has been proceeded. The surface of the secondary particle can be examined by SEM-EDS analysis, for example, and the state of covering of the interface between adjacent primary particles inside the secondary particle can be examined by STEM-EDS analysis or LA-ICP-MS (Laser Ablation Inductively Coupled Plasma Mass Spectrometry) analysis, for example.

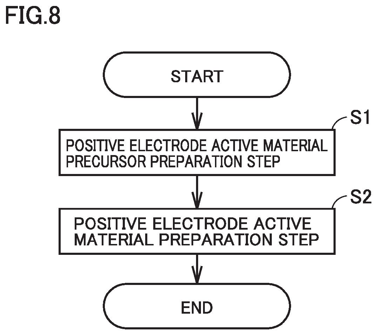

The method for producing the first active material can include, with reference to Fig. 8, for example, a positive electrode active material precursor production step (S1) for producing a positive electrode active material precursor, and after this, a positive electrode active material production step (S2) for mixing the positive electrode active material precursor and a lithium compound and calcining the resultant to produce a positive electrode active material. The positive electrode active material production step can further include at least one of a step of mixing the positive electrode active material with a covering layer-forming compound and a step of mixing two or more different active materials.

In the positive electrode active material precursor production step, a hydroxide which is the positive electrode active material precursor is prepared. Usually, the hydroxide contains the metallic elements included in the lithium-(transition metal) composite oxide, except lithium. The metallic elements can be blended in the same molar ratio as that of the metallic elements in the first active material except lithium. In the production of the positive electrode active material precursor, as an alkaline compound, a compound including ammonium ions such as, for example, ammonia (NH₃) is used. At this time, by adjusting the NH₃ concentration, the pH, the rates of supplying the alkaline compound and the metallic elements, and the reaction duration, it is possible to control the crystal orientation, the aspect ratio (the longer diameter and the shorter diameter of each primary particle 10p), and the arrangement of the primary particles. By adjusting the NH₃ concentration, it is possible to facilitate coordination of NH₃ molecules to the crystal surfaces of NCM seed crystals that are formed in early stages of coprecipitation and thereby inhibit growth of the crystals. The rate of coordination of NH₃ molecules varies depending on the type of the crystal faces, and therefore, by controlling the NH₃ concentration, it is possible to facilitate growth of a particular crystal face. Adjustment of the pH as well as adjustment of the rates of supplying the alkaline compound and the metallic elements may both serve as a factor for controlling the rate of crystal growth. In the case where the pH is too high, even when the NH₃ concentration is adjusted, crystal growth tends to proceed fast with no orientation, and in the case where it is too low, crystal growth tends not to proceed. When the pH is adjusted as appropriate and the rates of supplying the alkaline compound and the metallic elements are reduced to slow down the growth of the crystals, particles with uniform crystal orientations tend to be obtained.

The positive electrode active material precursor production step can include a reaction liquid preparation step and a crystallization step, for example. In the reaction liquid preparation step, the pH of distilled water can be adjusted to the range of 11 to 12, and the NH₃ concentration (hereinafter also referred to as the initial ammonia concentration) can be adjusted to the range of 0.3 to 1.0 mass%. The pH is the pH at a fluid temperature of 25°C. The pH can be adjusted by adding a sodium hydroxide (NaOH) aqueous solution at 9 to 11 mol/L. The NH₃ concentration can be adjusted by adding a NH₃ aqueous solution (for example, NH₄OH). The ammonia (ammonium ions) concentration of the NH₃ aqueous solution may be 15.0 mol/L or less, for example, and it may be from 13.0 to 13.5 mol/L. Nitrogen can be bubbled into the reaction liquid to create a nitrogen atmosphere. In the reaction liquid preparation step, an aqueous solution including metallic elements (hereinafter also referred to as a raw material metal aqueous solution) to be supplied in the subsequent crystallization step can be prepared. The concentration of the metallic elements in the raw material metal aqueous solution may be from 0.5 to 2.5 mol/L, or from 1.0 to 2.0 mol/L, for example.

Then, in the crystallization step, the raw material metal aqueous solution and the NH₃ aqueous solution can be supplied to the distilled water the pH and the NH₃ concentration of which were adjusted in the reaction liquid preparation step, for crystallization and thereby a hydroxide can be produced. The crystallization can be allowed to proceed while nitrogen bubbling is being performed. The rate of supplying the raw material metal aqueous solution may be from 50 to 70 mL/hr, or from 55 to 65 mL/hr, for example. The rate of supplying the NH₃ aqueous solution may be from 15 to 35 mL/hr, or from 20 to 30 mL/hr, for example. The raw material metal aqueous solution and the NH₃ aqueous solution can be supplied so that the molar ratio of ammonia to the metallic elements falls within the range of 2.0 to 3.5 or within the range of 2.5 to 3.0, for example. During the crystallization, the sodium hydroxide aqueous solution is supplied to maintain the pH constant. The pH can be set at 11.0 to 12.0. The reaction duration may be from 25 to 60 hours, for example. The reaction temperature may be from 40 to 60°C, for example, and it may be 50°C. The crystallization step can be implemented while the reaction liquid is being stirred. The stirring rate may be from 600 to 1000 rpm, for example, and it may be 800 rpm.

Then, in the positive electrode active material production step, the positive electrode active material precursor thus obtained and a lithium compound (for example, lithium hydroxide and/or the like) are mixed together and calcined. At this time, by adjusting the calcination temperature during the calcination as well as the calcination duration, it is possible to control the configuration of the secondary particles of the lithium-(transition metal) composite oxide as appropriate. The calcination can be two-step calcination. In the two-step calcination, the temperature in the first calcination may be from 300°C to 600°C, for example. The duration of the first calcination may be from 1 hour to 20 hours, for example. The temperature raising rate until the temperature for the first calcination is reached may be 10°C/min, for example. The temperature in the second calcination may be from 650°C to 800°C, for example. The duration of the second calcination may be from 5 hours to 30 hours, for example. The temperature raising rate until the temperature for the second calcination is reached may be 10°C/min, for example. In this way, the first active material can be prepared.

The positive electrode active material may be solely composed of the first active material, or may contain a positive electrode active material other than the first active material as long as the effect of the present disclosure is not impaired (for example, in less than 10 mass%, preferably in 5 mass% or less, relative to the total mass of the positive electrode active material).

### <Positive Electrode Plate>

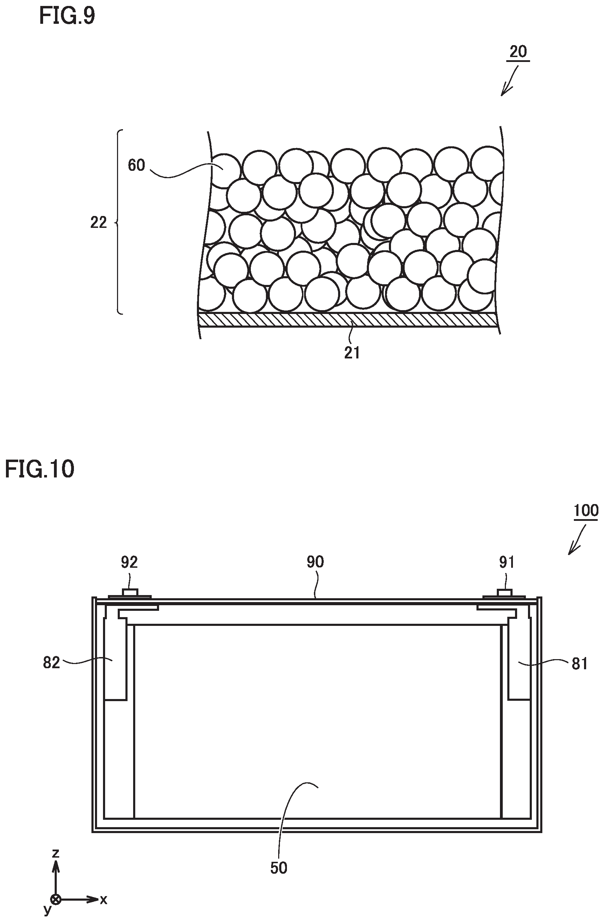

A positive electrode plate comprises a positive electrode active material layer including the above-mentioned positive electrode active material. Fig. 9 is a schematic cross-sectional view viewed in a direction vertical to the thickness direction (the stacking direction) of the positive electrode plate. Referring to Fig. 9, in a positive electrode plate 20, a positive electrode active material layer 22 may be formed directly or indirectly on one side or both sides of a positive electrode base material 21. Positive electrode base material 21 may be a conductive sheet made of Al alloy foil, pure Al foil, and/or the like, for example. Positive electrode active material layer 22 includes a positive electrode active material 60. Positive electrode active material 60 includes the above-mentioned positive electrode active material. Positive electrode active material 60 can be produced by the above-mentioned method of producing a positive electrode active material. Positive electrode active material layer 22 may further include a conductive material, a binder, and the like.

The thickness of positive electrode active material layer 22 may be from 10 µm to 200 µm, for example. Positive electrode active material layer 22 may be dense. The density of positive electrode active material layer 22 may be 3.5 g/cm³ or more, or 3.6 g/cm³ or more, or 3.7 g/cm³ or more, for example. The density of positive electrode active material layer 22 may be 4.0 g/cm³ or less, for example.

The content of positive electrode active material 60 in positive electrode active material layer 22 (more specifically, the ratio of the mass of positive electrode active material 60 to the total mass of positive electrode active material layer 22) is not particularly limited, and, for example, it is 80 mass% or more, preferably 87 mass% or more, more preferably 90 mass% or more, further preferably 95 mass% or more, most preferably 97 mass% or more, relative to the total mass of positive electrode active material layer 22.

The method of producing positive electrode plate 20 includes (A) preparation of a positive electrode slurry, (B) application, and (C) rolling. In (A) preparation of a positive electrode slurry, a positive electrode slurry including the positive electrode active material produced by the above-mentioned method of producing a positive electrode active material is prepared. The positive electrode slurry is prepared by dispersing the positive electrode active material in a dispersion medium. The dispersion medium may be an organic solvent, and examples thereof include N-methyl-2-pyrrolidone (NMP), tetrahydrofuran (THF), dimethylformamide (DMF), methyl ethyl ketone (MEK), dimethyl sulfoxide (DMSO), and the like. The positive electrode slurry can include a conductive material and a binder. Examples of the conductive material include carbon blacks such as carbon nanotubes (CNTs) and acetylene black (AB), other carbon materials (such as graphite), and the like. Examples of the binder include polyvinylidene difluoride (PVdF), polytetrafluoroethylene (PTFE), polyimide (PI), polyamide (PA), polyamide-imide (PAI), butadiene rubber (BR), styrene-butadiene rubber (SBR), nitrile-butadiene rubber (NBR), styrene-ethylene-butylene-styrene block copolymer (SEBS), carboxymethylcellulose (CMC), a combination of these, and the like. The slurry may have a solid concentration of 40% to 80%, for example. For the mixing, a freely-selected stirring apparatus, a freely-selected mixing apparatus, and/or a freely-selected dispersing apparatus may be used.

In (B) application, the positive electrode slurry is applied to the surface of positive electrode base material 21 to form positive electrode active material layer 22. In (C) rolling, positive electrode active material layer 22 and positive electrode base material 21 are rolled to produce positive electrode plate 20. By rolling, a raw sheet of positive electrode plate 20 is produced. The raw sheet may be cut into a certain planar size suitable for the specifications of a battery 100.

### <Non-Aqueous Electrolyte Secondary Battery>

Fig. 10 is a schematic view illustrating an example of a non-aqueous electrolyte secondary battery according to the present embodiment. Battery 100 illustrated in Fig. 10 may be, for example, a lithium-ion battery as a main electric power supply or a motive force assisting electric power supply of an electric vehicle.

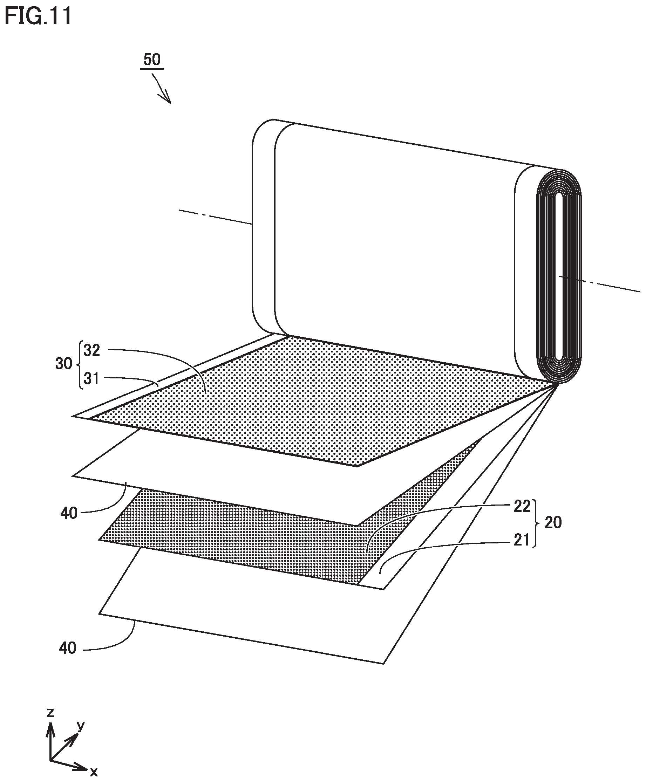

Battery 100 includes an exterior package 90. Exterior package 90 accommodates an electrode assembly 50 and an electrolyte (not illustrated). Electrode assembly 50 is connected to a positive electrode terminal 91 via a positive electrode current-collecting member 81. Electrode assembly 50 is connected to a negative electrode terminal 92 via a negative electrode current-collecting member 82. Fig. 11 is a schematic view illustrating an example of an electrode assembly according to the present embodiment. Electrode assembly 50 is a wound-type one. The electrode assembly may be a stack-type one. Electrode assembly 50 includes positive electrode plate 20, a separator 40, and a negative electrode plate 30. That is, battery 100 includes positive electrode plate 20. Positive electrode plate 20 includes positive electrode active material layer 22 and positive electrode base material 21. Negative electrode plate 30 includes a negative electrode active material layer 32 and a negative electrode base material 31.

Usually, negative electrode plate 30 has negative electrode base material 31, as well as negative electrode active material layer 32 formed on one side or both sides of negative electrode base material 31. Negative electrode base material 31 is a metal foil sheet made of a copper material such as copper and copper alloy, for example. Negative electrode active material layer 32 includes a negative electrode active material, and it may further include a conductive material, a binder, and the like.

The negative electrode active material may be a known material, and examples thereof include carbon-based active material particles such as graphite, metal-based active material particles that include an element selected from the group consisting of Si, Sn, Sb, Bi, Ti, and Ge, and the like. The negative electrode active material can include carbon-based active material particles and a silicon-containing material, for example. The silicon-containing material may be a Si-C composite material, for example. Examples of the conductive material include those mentioned above. Examples of the binder include cellulose-based resins such as CMC, methylcellulose (MC), and hydroxypropylcellulose; polyacrylic acid; styrene-butadiene rubber (SBR); and the like. CMC may also be used as a thickener.

Separator 40 has a monolayered or multilayered base material, and on at least one side of the base material, a functional layer may be formed. The base material may be a porous sheet such as a film and/or a nonwoven fabric made of a resin such as polyolefin (such as polyethylene and polypropylene), polyester, cellulose, polyamide, and/or the like. The functional layer may be an adhesive layer and/or a heat-resistant layer, for example. The adhesive layer can be formed with an adhesive agent, for example. The heat-resistant layer can include a filler and a binder, for example.

The electrolyte may be a non-aqueous electrolyte solution, for example. The non-aqueous electrolyte solution is preferably obtained by adding an electrolyte to a non-aqueous solvent such as an organic solvent. Examples of the electrolyte include one or more from LiPF₆, LiBF₄, LiClO₄, LiFSO₃, LiBOB, and the like. Examples of the non-aqueous solvent include one or more from ethylene carbonate (EC), ethyl methyl carbonate (EMC), dimethyl carbonate (DMC), propylene carbonate (PC), butylene carbonate (BC), diethyl carbonate (DEC), and the like. The non-aqueous electrolyte solution may further include an additive such as vinylene carbonate (VC), vinylethylene carbonate (VEC), fluoroethylene carbonate, and/or the like.

In the following, the present invention will be described in further detail by way of Examples.

### [Examples]

### [Preparation of Positive Electrode Plate]

100 parts by mass of a first active material obtained in Examples and Comparative Examples, 1 part by mass of graphite as a conductive material, and 0.9 parts by mass of polyvinylidene difluoride powder as a binder were mixed together, and a proper amount of N-methyl-2-pyrrolidone (NMP) was further added thereto to prepare a positive electrode composite material slurry. The positive electrode composite material slurry was applied to both sides of a positive electrode current collector made of aluminum foil, and dried. Subsequently, the coating film was rolled with a roller to prepare a positive electrode plate in which a positive electrode active material layer was formed on each side of the positive electrode current collector.

### [Preparation of Non-Aqueous Electrolyte Secondary Battery]

### (Preparation of Negative Electrode Plate)

Carbon material graphite as a negative electrode active material, styrene-butadiene rubber (SBR) as a binder, and carboxymethylcellulose (CMC) as a thickener were mixed in a solid mass ratio of (negative electrode active material):SBR:CMC=100:1:1 to form a slurry for forming a negative electrode active material layer. The resulting slurry for forming a negative electrode active material layer was applied to a negative electrode current collector made of copper foil having a thickness of 10 µm, and dried to form a negative electrode active material layer. The resulting negative electrode active material layer was roll-pressed with a roller and cut into certain dimensions to prepare a negative electrode plate.

### (Preparation of Separator)

As a separator, a porous polyolefin sheet having a thickness of 20 µm with a three-layer structure (PP/PE/PP) was prepared.

### (Preparation of Non-Aqueous Electrolyte)

As a non-aqueous electrolyte, a mixed solvent including ethylene carbonate (EC), ethyl methyl carbonate (EMC), and dimethyl carbonate (DMC) in a volume ratio of EC:EMC:DMC=30:40:30 in which supporting salt LiPF₆ was dissolved in a concentration of 1 mol/L was prepared.

### (Preparation of Non-Aqueous Electrolyte Secondary Battery)

The positive electrode plate and the negative electrode plate were stacked on top of one another with the separator interposed therebetween, and thus a stack was obtained. Then, the stack was wound to form a wound body, which was then pressed into a flat shape, and thus a flat electrode assembly was obtained. A collector terminal was attached to the electrode assembly, and the resultant was inserted into a battery case, followed by fusion treatment and injection of a non-aqueous electrolyte thereinto. Subsequently, the battery case was sealed to prepare a non-aqueous electrolyte secondary battery.

### [Measurement of Average Particle Size D50 of Positive Electrode Active Material (Secondary Particles)]

Measurement was carried out with the use of a laser diffraction and scattering particle size distribution measuring apparatus and/or the like.

### [Measurement of Average Particle Size of Primary Particles]

In an SEM image of the surface of a secondary particle, the widths of primary particles were measured, which were regarded as the particle sizes of the primary particles. The particle size was measured for a total of a hundred primary particles, namely ten primary particles randomly selected from each of ten secondary particles randomly selected, and the average value thereof was calculated for use as the average particle size of the primary particles.

### [Measurement of First Ratio]

Ten secondary particles were selected from the positive electrode active material prepared in Examples and Comparative Examples, and CP processing was carried out to prepare a cross-sectional sample for use in EBSD analysis. An SEM-EDS (the SEM was JSM-IT 800 manufactured by JEOL Ltd.; the EDS was AZtecLive, AZtecHKL, AZtecCrystal, SymmetryS3) was used for preparing an IPF map of crystal orientations of primary particles in a cross section of the positive electrode active material (a particle group formed of a plurality of secondary particles), selected in an image obtained by examination by 5000-times magnification, that had a cross-sectional diameter the same as or close to the average particle size D50 of the positive electrode active material.

In the IPF map, ten lines were drawn to divide the particle into eleven equal parts, and the total number of boundaries between primary particles adjacent to each other on the ten lines at which crystal misorientation was 60° or more as well as the total number of the primary particles on the ten lines were determined, followed by dividing the total number of the boundaries by the total number of the primary particles to determine a first ratio. The average value of the first ratios determined for the ten secondary particles was calculated. Table 1 gives the average value thus calculated, as the first ratio.

### [Evaluation of Charge-Discharge Cycling Performance]

In an environment at a temperature of 60°C, the non-aqueous electrolyte secondary battery prepared in the above manner was subjected to constant-current charging at a value of current of 0.5 C until 4.2 V was reached, and then subjected to constant-current discharging at a value of current of 0.5 C until 2.5 V was reached. This charge-discharge cycle was repeated 200 times. The capacity retention (%) during the charge-discharge cycles was determined by the following equation. 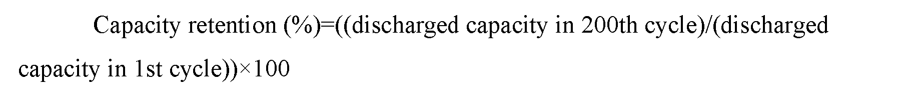 Capacity retention (%)=((discharged capacity in 200th cycle)/(discharged capacity in 1st cycle))×100

The higher the capacity retention (%) is, the better the charge-discharge cycling performance is rated.

### <Comparative Example 1>

### [Production of Positive Electrode Active Material Precursor]

### (Reaction Tank Preparation Step)

NiSO₄, CoSO₄, and MnSO₄ were mixed together in distilled water in a molar ratio of nickel:cobalt:manganese=80:10:10 to prepare a raw material metal aqueous solution having a raw material metal concentration of 2.0 mol/L. Then, into the reaction tank containing the distilled water, a 10-mol/L sodium hydroxide (NaOH) aqueous solution was added so as to achieve a pH of 11.5 at a reference liquid temperature of 25°C.

### (Crystallization Step)

Subsequently, while nitrogen gas was being flowed into the reaction tank for bubbling and a 10-mol/L sodium hydroxide aqueous solution was being supplied thereinto at a rate of 60 mL/hr for maintaining the pH (hereinafter also referred to as the crystallization pH) at 11.5 at a reference liquid temperature of 25°C, the raw material metal aqueous solution was supplied at a rate of 60 mL/hr and a 13.3-mol/L ammonia (NH₃) aqueous solution was supplied at a rate of 25 mL/hr at a molar ratio of ammonia to the raw material metal (hereinafter also referred to as the supplying rate ratio) of 1.0, for allowing crystallization to proceed for 48 hours under conditions at a reaction temperature of 50°C and a stirring rate of 800 rpm. The pH inside the reaction tank was controlled by adjusting the flow rate of the sodium hydroxide aqueous solution with the use of a pH controller. Then, supply of the solution was stopped to terminate the crystallization, and the resultant was subjected to filtration, rinsing with water, and drying in this order to prepare a positive electrode active material precursor C1.

### [Production of Positive Electrode Active Material]

The positive electrode active material precursor C1 and lithium hydroxide (LiOH) were mixed together so as to achieve a ratio of the total number of moles of lithium relative to the total number of moles of metallic elements except lithium (hereinafter also referred to as the Li/Me ratio) of 1.01, and then calcination was carried out under calcination conditions where the temperature was maintained at 760°C for 13 hours in an oxidizing atmosphere, to prepare a positive electrode active material. The positive electrode active material thus obtained was in the form of secondary particles each consisting of 100 or more primary particles aggregated together. The aspect ratio of the primary particles was 1.9, the average particle size of the primary particles was 0.4 µm, and the average particle size D50 of the secondary particles was 13.4 µm. The first ratio and the charge-discharge cycling performance were evaluated. Results are given in Table 1.

### <Comparative Example 2>

### [Production of Positive Electrode Active Material Precursor]

Except that the crystallization pH in the crystallization step was changed to 10.5, the same manner as in Comparative Example 1 was employed to produce a positive electrode active material precursor C2.

### [Production of Positive Electrode Active Material]

The positive electrode active material precursor C2 and lithium hydroxide (LiOH) were mixed together so as to achieve a ratio of the total number of moles of lithium relative to the total number of moles of metallic elements except lithium (hereinafter also referred to as the Li/Me ratio) of 1.01, and then calcination was carried out under calcination conditions where, in an oxidizing atmosphere, the temperature was raised to reach 500°C at a temperature raising rate of 10°C/min and maintained at 500°C for 3 hours and then the temperature was raised to reach 760°C at a temperature raising rate of 2°C/min and maintained at 760°C for 10 hours, to prepare a positive electrode active material. The positive electrode active material thus obtained was in the form of secondary particles each consisting of 100 or more primary particles aggregated together. The aspect ratio of the primary particles was 1.5, the average particle size of the primary particles was 0.3 µm, and the average particle size D50 of the secondary particles was 13.1 µm. The first ratio and the charge-discharge cycling performance were evaluated. Results are given in Table 1.

### <Comparative Example 3>

### [Production of Positive Electrode Active Material Precursor]

### (Reaction Tank Preparation Step)

NiSO₄, CoSO₄, and MnSO₄ were mixed together in distilled water in a molar ratio of nickel:cobalt:manganese=80:10:10 to prepare a raw material metal aqueous solution having a raw material metal concentration of 2.0 mol/L. Then, into the reaction tank containing the distilled water, a 10-mol/L sodium hydroxide (NaOH) aqueous solution was added so as to achieve a pH of 11.5 at a reference liquid temperature of 25°C, and a 13.3-mol/L ammonia aqueous solution was added so as to achieve an ammonia (NH₃) concentration (hereinafter also referred to as the initial ammonia concentration) of 1.0 mass%.

### (Crystallization Step)

Subsequently, while nitrogen gas was being flowed into the reaction tank for bubbling and a 10-mol/L sodium hydroxide aqueous solution was being supplied thereinto at a rate of 60 mL/hr for maintaining the pH at 11.5 at a reference liquid temperature of 25°C, the raw material metal aqueous solution was supplied at a rate of 60 mL/hr and a 13.3-mol/L ammonia aqueous solution was supplied at a rate of 25 mL/hr at a molar ratio of ammonia to the raw material metal of 2.7, for allowing crystallization to proceed for 48 hours under conditions at a reaction temperature of 50°C and a stirring rate of 800 rpm. The pH inside the reaction tank was controlled by adjusting the flow rate of the sodium hydroxide aqueous solution with the use of a pH controller. Then, supply of the solution was stopped to terminate the crystallization, and the resultant was subjected to filtration, rinsing with water, and drying in this order to prepare a positive electrode active material precursor C3.

### [Production of Positive Electrode Active Material]

Except that the positive electrode active material precursor C3 was used, the same manner as in the production of positive electrode active material in Comparative Example 1 was employed to produce a positive electrode active material. The positive electrode active material thus obtained was in the form of secondary particles each consisting of 100 or more primary particles aggregated together. The aspect ratio of the primary particles was 1.9, the average particle size of the primary particles was 0.4 µm, and the average particle size D50 of the secondary particles was 14.1 µm. The first ratio and the charge-discharge cycling performance were evaluated. Results are given in Table 1.

### <Example 1>

### [Production of Positive Electrode Active Material Precursor]

A positive electrode active material precursor 1 was produced in the same manner as in the production of positive electrode active material precursor in Comparative Example 3.

### [Production of Positive Electrode Active Material]

Except that the positive electrode active material precursor 1 was used, the same manner as in the production of positive electrode active material in Comparative Example 2 was employed to produce a positive electrode active material. The positive electrode active material thus obtained was in the form of secondary particles each consisting of 100 or more primary particles aggregated together. The aspect ratio of the primary particles was 1.9, the average particle size of the primary particles was 0.4 µm, and the average particle size D50 of the secondary particles was 13.7 µm. The first ratio and the charge-discharge cycling performance were evaluated. Results are given in Table 1.

### <Example 2>

### [Production of Positive Electrode Active Material Precursor]

A positive electrode active material precursor 2 was produced in the same manner as in Comparative Example 3 except that the initial ammonia concentration in the crystallization step of the production of positive electrode active material precursor in Comparative Example 3 was changed to 0.3 mass%.

### [Production of Positive Electrode Active Material]

Except that the positive electrode active material precursor 2 was used, the same manner as in the production of positive electrode active material in Comparative Example 2 was employed to produce a positive electrode active material. The positive electrode active material thus obtained was in the form of secondary particles each consisting of 100 or more primary particles aggregated together. The aspect ratio of the primary particles was 2.0, the average particle size of the primary particles was 0.4 µm, and the average particle size D50 of the secondary particles was 14.0 µm. The first ratio and the charge-discharge cycling performance were evaluated. Results are given in Table 1.

### <Example 3>

### [Production of Positive Electrode Active Material Precursor]

A positive electrode active material precursor 3 was produced in the same manner as in Comparative Example 3.

### [Production of Positive Electrode Active Material]

The positive electrode active material precursor 3 and lithium hydroxide (LiOH) were mixed together so as to achieve a ratio of the total number of moles of lithium relative to the total number of moles of metallic elements except lithium (hereinafter also referred to as the Li/Me ratio) of 1.01, and then calcination was carried out under calcination conditions where, in an oxidizing atmosphere, the temperature was raised to reach 500°C at a temperature raising rate of 10°C/min and maintained at 500°C for 3 hours and then the temperature was raised to reach 740°C at a temperature raising rate of 2°C/min and maintained at 740°C for 10 hours, to prepare a positive electrode active material. The positive electrode active material thus obtained was in the form of secondary particles each consisting of 100 or more primary particles aggregated together. The aspect ratio of the primary particles was 2.1, the average particle size of the primary particles was 0.3 µm, and the average particle size D50 of the secondary particles was 13.2 µm. The first ratio and the charge-discharge cycling performance were evaluated. Results are given in Table 1.

### <Example 4>

### [Production of Positive Electrode Active Material Precursor]

A positive electrode active material precursor 4 was produced in the same manner as in Example 2.

### [Production of Positive Electrode Active Material]

Except that the positive electrode active material precursor 4 was used, the same manner as in the production of positive electrode active material in Example 3 was employed to produce a positive electrode active material. The positive electrode active material thus obtained was in the form of secondary particles each consisting of 100 or more primary particles aggregated together. The aspect ratio of the primary particles was 2.1, the average particle size of the primary particles was 0.3 µm, and the average particle size D50 of the secondary particles was 13.4 µm. The first ratio and the charge-discharge cycling performance were evaluated. Results are given in Table 1.

### <Comparative Example 4>

Except that in the reaction tank preparation step of the production of positive electrode active material precursor, NiSO₄, CoSO₄, and MnSO₄ were mixed together in distilled water in a molar ratio of nickel:cobalt:manganese=60:20:20 to prepare a raw material metal aqueous solution having a raw material metal concentration of 2.0 mol/L, the same manner as in Comparative Example 1 was employed to produce a positive electrode active material precursor C4.

### [Production of Positive Electrode Active Material]

The positive electrode active material precursor C4 and lithium hydroxide (LiOH) were mixed together so as to achieve a ratio of the total number of moles of lithium relative to the total number of moles of metallic elements except lithium (hereinafter also referred to as the Li/Me ratio) of 1.01, and then calcination was carried out under calcination conditions where the temperature was maintained at 780°C for 13 hours in an oxidizing atmosphere, to prepare a positive electrode active material. The positive electrode active material thus obtained was in the form of secondary particles each consisting of 100 or more primary particles aggregated together. The aspect ratio of the primary particles was 1.9, the average particle size of the primary particles was 0.4 µm, and the average particle size D50 of the secondary particles was 13.6 µm. The first ratio and the charge-discharge cycling performance were evaluated. Results are given in Table 1.

### <Example 5>

### [Production of Positive Electrode Active Material Precursor]

A positive electrode active material precursor 5 was produced in the same manner as in Comparative Example 4 except that the initial ammonia concentration in the crystallization step of the production of positive electrode active material precursor in Comparative Example 4 was changed to 0.3 mass% and supplying was carried out so as to achieve a molar ratio of ammonia to the raw material metal of 2.7.

### [Production of Positive Electrode Active Material]

Except that the positive electrode active material precursor 5 was used and calcination was carried out under calcination conditions where in an oxidizing atmosphere, the temperature was raised to reach 500°C at a temperature raising rate of 10°C/min and maintained at 500°C for 3 hours and then the temperature was raised to reach 780°C at a temperature raising rate of 2°C/min and maintained at 780°C for 10 hours, the same manner as in the production of positive electrode active material in Comparative Example 2 was employed to produce a positive electrode active material. The positive electrode active material thus obtained was in the form of secondary particles each consisting of 100 or more primary particles aggregated together. The aspect ratio of the primary particles was 1.9, the average particle size of the primary particles was 0.4 µm, and the average particle size D50 of the secondary particles was 13.7 µm. The first ratio and the charge-discharge cycling performance were evaluated. Results are given in Table 1.

### <Comparative Example 5>

Except that in the reaction tank preparation step of the production of positive electrode active material precursor, NiSO₄, CoSO₄, and MnSO₄ were mixed together in distilled water in a molar ratio of nickel:cobalt:manganese=70:10:20 to prepare a raw material metal aqueous solution having a raw material metal concentration of 2.0 mol/L, the same manner as in Comparative Example 1 was employed to produce a positive electrode active material precursor C5.

### [Production of Positive Electrode Active Material]

The positive electrode active material precursor C4 and lithium hydroxide (LiOH) were mixed together so as to achieve a ratio of the total number of moles of lithium relative to the total number of moles of metallic elements except lithium (hereinafter also referred to as the Li/Me ratio) of 1.01, and then calcination was carried out under calcination conditions where the temperature was maintained at 770°C for 13 hours in an oxidizing atmosphere, to prepare a positive electrode active material. The positive electrode active material thus obtained was in the form of secondary particles each consisting of 100 or more primary particles aggregated together. The aspect ratio of the primary particles was 1.9, the average particle size of the primary particles was 0.3 µm, and the average particle size D50 of the secondary particles was 14.1 µm. The first ratio and the charge-discharge cycling performance were evaluated. Results are given in Table 1.

### <Example 6>

### [Production of Positive Electrode Active Material Precursor]

A positive electrode active material precursor 6 was produced in the same manner as in Comparative Example 5 except that the initial ammonia concentration in the crystallization step of the production of positive electrode active material precursor in Comparative Example 5 was changed to 0.3 mass% and supplying was carried out so as to achieve a molar ratio of ammonia to the raw material metal of 2.7.

### [Production of Positive Electrode Active Material]

Except that the positive electrode active material precursor 6 was used and calcination was carried out under calcination conditions where in an oxidizing atmosphere, the temperature was raised to reach 500°C at a temperature raising rate of 10°C/min and maintained at 500°C for 3 hours and then the temperature was raised to reach 770°C at a temperature raising rate of 2°C/min and maintained at 770°C for 10 hours, the same manner as in the production of positive electrode active material in Comparative Example 2 was employed to produce a positive electrode active material. The positive electrode active material thus obtained was in the form of secondary particles each consisting of 100 or more primary particles aggregated together. The aspect ratio of the primary particles was 1.9, the average particle size of the primary particles was 0.3 µm, and the average particle size D50 of the secondary particles was 13.9 µm. The first ratio and the charge-discharge cycling performance were evaluated. Results are given in Table 1.

### <Comparative Example 6>

Except that in the reaction tank preparation step of the production of positive electrode active material precursor, NiSO₄, CoSO₄, and MnSO₄ were mixed together in distilled water in a molar ratio of nickel:cobalt:manganese=90:5:5 to prepare a raw material metal aqueous solution having a raw material metal concentration of 2.0 mol/L, the same manner as in Comparative Example 1 was employed to produce a positive electrode active material precursor C6.

### [Production of Positive Electrode Active Material]

The positive electrode active material precursor C6 and lithium hydroxide (LiOH) were mixed together so as to achieve a ratio of the total number of moles of lithium relative to the total number of moles of metallic elements except lithium (hereinafter also referred to as the Li/Me ratio) of 1.01, and then calcination was carried out under calcination conditions where the temperature was maintained at 750°C for 13 hours in an oxidizing atmosphere, to prepare a positive electrode active material. The positive electrode active material thus obtained was in the form of secondary particles each consisting of 100 or more primary particles aggregated together. The aspect ratio of the primary particles was 1.9, the average particle size of the primary particles was 0.3 µm, and the average particle size D50 of the secondary particles was 13.5 µm. The first ratio and the charge-discharge cycling performance were evaluated. Results are given in Table 1.

### <Example 7>

### [Production of Positive Electrode Active Material Precursor]

A positive electrode active material precursor 7 was produced in the same manner as in Comparative Example 6 except that the initial ammonia concentration in the crystallization step of the production of positive electrode active material precursor in Comparative Example 6 was changed to 0.3 mass% and supplying was carried out so as to achieve a molar ratio of ammonia to the raw material metal of 2.7.

### [Production of Positive Electrode Active Material]

Except that the positive electrode active material precursor 7 was used and calcination was carried out under calcination conditions where in an oxidizing atmosphere, the temperature was raised to reach 500°C at a temperature raising rate of 10°C/min and maintained at 500°C for 3 hours and then the temperature was raised to reach 750°C at a temperature raising rate of 2°C/min and maintained at 750°C for 10 hours, the same manner as in the production of positive electrode active material in Comparative Example 2 was employed to produce a positive electrode active material. The positive electrode active material thus obtained was in the form of secondary particles each consisting of 100 or more primary particles aggregated together. The aspect ratio of the primary particles was 1.9, the average particle size of the primary particles was 0.4 µm, and the average particle size D50 of the secondary particles was 13.2 µm. The first ratio and the charge-discharge cycling performance were evaluated. Results are given in Table 1.

**[Table 1]**

| | Composition | First ratio | Capacity retention (%) |
|---|---|---|---|
| Comp. Ex. 1 | Li_{1.01}Ni_{0.8}Co_{0.1}Mn_{0.1}O₂ | 0.56 | 84.9 |
| Comp. Ex. 2 | Li_{1.01}Ni_{0.8}Co_{0.1}Mn_{0.1}O₂ | 0.71 | 83.5 |
| Comp. Ex. 3 | Li_{1.01}Ni_{0.8}Co_{0.1}Mn_{0.1}O₂ | 0.62 | 84.1 |
| Ex. 1 | Li_{1.01}Ni_{0.8}Co_{0.1}Mn_{0.1}O₂ | 0.49 | 87.6 |
| Ex. 2 | Li_{1.01}Ni_{0.8}Co_{0.1}Mn_{0.1}O₂ | 0.44 | 87.7 |
| Ex. 3 | Li_{1.01}Ni_{0.8}Co_{0.1}Mn_{0.1}O₂ | 0.49 | 87.7 |
| Ex. 4 | Li_{1.01}Ni_{0.8}Co_{0.1}Mn_{0.1}O₂ | 0.43 | 87.9 |
| Comp. Ex. 4 | Li_{1.01}Ni_{0.6}Co_{0.2}Mn_{0.2}O₂ | 0.68 | 87.2 |
| Ex. 5 | Li_{1.01}Ni_{0.6}CO_{0.2}Mn_{0.2}O₂ | 0.49 | 87.8 |
| Comp. Ex. 5 | Li_{1.01}Ni_{0.7}Co_{0.1}Mn_{0.2}O₂ | 0.69 | 86.1 |
| Ex. 6 | Li_{1.01}Ni_{0.7}Co_{0.1}Mn_{0.2}O₂ | 0.48 | 87.9 |
| Comp. Ex. 6 | Li_{1.01}Ni_{0.9}Co_{0.05}Mn_{0.05}O₂ | 0.71 | 83.5 |
| Ex. 7 | Li_{1.01}Ni_{0.9}Co_{0.05}Mn_{0.05}O₂ | 0.49 | 87.4 |

With reference to Table 1, Examples 1 to 7 where the Ni content rate was 60 mol% or more and the first ratio was 0.50 or less achieved high capacity retention as compared to Comparative Examples 1 to 6 where the first ratio was more than 0.50. This indicates that the present disclosure provides a positive electrode active material, a positive electrode plate, and a non-aqueous electrolyte secondary battery, each of which has a nickel content rate of 60 mol% or more and is capable of enhancing charge-discharge cycling performance.

### [Measurement of Oxygen Release Rate]

The cell was charged to SOC 100% (4.2 V) and then disassembled, and the positive electrode plate was taken out. The positive electrode plate thus taken out was rinsed with ethyl methyl carbonate (EMC) for removal of unwanted electrolyte solution salt, followed by drying. After drying, the positive electrode active material layer was separated from the positive electrode plate, and the positive electrode active material layer thus separated was subjected to TG-DTA analysis. While the temperature was being raised at 5°C/min, the decrease of weight was measured. The weight decrease rate (%) thus measured was differentiated with respect to time (min), and for the largest value obtained, the absolute value was determined, which was regarded as the oxygen release rate (%/min). The lower the oxygen release rate is, the higher the thermal stability is considered to be.

For the positive electrode active materials prepared in Examples 1, 2, and 5 to 7 and Comparative Example 3, the oxygen release rate was measured. Results are given in Table 2.

### <Examples 8 to 11>

Except that the Li/Me ratio in the production of positive electrode active material in Example 1 was changed to the value specified in Table 2, the same manner as in Example 1 was employed to produce a positive electrode active material. The positive electrode active material thus obtained was subjected to evaluation of the first ratio, the cycle capacity retention, and the oxygen release rate. Results are given in Table 2.

### <Comparative Example 7>

Except that the Li/Me ratio in the production of positive electrode active material in Comparative Example 3 was changed to the value specified in Table 2, the same manner as in Comparative Example 3 was employed to produce a positive electrode active material. The positive electrode active material thus obtained was subjected to evaluation of the first ratio, the cycle capacity retention, and the oxygen release rate. Results are given in Table 2.

### <Example 12>

Except that the Li/Me ratio in the production of positive electrode active material in Example 2 was changed to the value specified in Table 2, the same manner as in Example 2 was employed to produce a positive electrode active material. The positive electrode active material thus obtained was subjected to evaluation of the first ratio, the cycle capacity retention, and the oxygen release rate. Results are given in Table 2.

### <Example 13>

Except that the Li/Me ratio in the production of positive electrode active material in Example 5 was changed to the value specified in Table 2, the same manner as in Example 5 was employed to produce a positive electrode active material. The positive electrode active material thus obtained was subjected to evaluation of the first ratio, the cycle capacity retention, and the oxygen release rate. Results are given in Table 2.

### <Example 14>

Except that the Li/Me ratio in the production of positive electrode active material in Example 6 was changed to the value specified in Table 2, the same manner as in Example 6 was employed to produce a positive electrode active material. The positive electrode active material thus obtained was subjected to evaluation of the first ratio, the cycle capacity retention, and the oxygen release rate. Results are given in Table 2.

### <Example 15>

Except that the Li/Me ratio in the production of positive electrode active material in Example 7 was changed to the value specified in Table 2, the same manner as in Example 7 was employed to produce a positive electrode active material. The positive electrode active material thus obtained was subjected to evaluation of the first ratio, the cycle capacity retention, and the oxygen release rate. Results are given in Table 2.

**[Table 2]**

| | Composition | Li/Me ratio | First ratio | Capacity retention (%) | Oxygen release rate (%/min) |
|---|---|---|---|---|---|
| Ex. 1 | Li_{1.01}Ni_{0.8}Co_{0.1}Mn_{0.1}O₂ | 1.01 | 0.49 | 87.6 | 2.1 |
| Ex. 8 | Li_{1.06}Ni_{0.8}Co_{0.1}Mn_{0.1}O₂ | 1.06 | 0.49 | 88.1 | 1.4 |
| Ex. 9 | Li_{1.10}Ni_{0.8}Co_{0,1}Mn_{0.1}O₂ | 1.10 | 0.49 | 88.2 | 0.9 |
| Ex. 10 | Li_{1.15}Ni_{0.8}Co_{0.1}Mn_{0.1}O₂ | 1.15 | 0.49 | 88.2 | 0.8 |
| Ex. 11 | Li_{1.21}Ni_{0.8}Co_{0.1}Mn_{0.1}O₂ | 1.21 | 0.49 | 87.8 | 0.8 |
| Comp. Ex. 3 | Li_{1.01}Ni_{0.8}Co_{0.1}Mn_{0.1}O₂ | 1.01 | 0.62 | 84.1 | 2.2 |
| Comp. Ex. 7 | Li_{1.06}Ni_{0.8}Co_{0.1}Mn_{0.1}O₂ | 1.06 | 0.62 | 84.2 | 1.4 |
| Ex. 2 | Li_{1.01}Ni_{0.8}Co_{0.1}Mn_{0.1}O₂ | 1.01 | 0.44 | 87.7 | 2.1 |
| Ex. 12 | Li_{1.06}Ni_{0.8}Co_{0.1}Mn_{0.1}O₂ | 1.06 | 0.44 | 88.3 | 1.3 |
| Ex. 5 | Li_{1.01}Ni_{0.6}Co_{0.2}Mn_{0.2}O₂ | 1.01 | 0.49 | 87.8 | 0.6 |
| Ex. 13 | Li_{1.06}Ni_{0.6}Co_{0.2}Mn_{0.2}O₂ | 1.06 | 0.49 | 88.3 | 0.6 |
| Ex. 6 | Li_{1.01}Ni_{0.7}Co_{0.1}Mn_{0.2}O₂ | 1.01 | 0.48 | 87.9 | 1.0 |
| Ex. 14 | Li_{1.06}Ni_{0.7}Co_{0.1}Mn_{0.2}O₂ | 1.06 | 0.48 | 88.3 | 0.9 |
| Ex. 7 | Li_{1.01}Ni_{0.9}Co_{0.05}Mn_{0.05}O₂ | 1.01 | 0.49 | 87.4 | 3.3 |
| Ex. 15 | Li_{1.06}Ni_{0.9}Co_{0.05}Mn_{0.05}O₂ | 1.06 | 0.49 | 88.0 | 1.8 |

With reference to Table 1, Examples 8 to 15 where the Ni content rate was 60 mol% or more and the first ratio was 0.50 or less achieved high capacity retention, while Comparative Example 7 where the Ni content rate was 60 mol% or more and the first ratio was more than 0.50 yielded low capacity retention.

In addition, when comparisons are made between Example 1 and Examples 8 to 11, between Example 2 and Example 12, between Example 6 and Example 14, and between Example 7 and Example 15, it is found that even when the Ni content rate was 70 mol% or more, low oxygen release rate was achieved if the Li/Me ratio was 1.06 or more. This indicates that the present disclosure provides a positive electrode active material, a positive electrode plate, and a non-aqueous electrolyte secondary battery, each of which has a nickel content rate of 70 mol% or more, enhanced charge-discharge cycling performance, and high thermal stability.

Although the embodiments of the present invention have been described, the embodiments disclosed herein are illustrative and non-restrictive in any respect. The scope of the present invention is defined by the terms of the claims, and is intended to encompass any modifications within the meaning and the scope equivalent to the terms of the claims.

## Claims

1. A positive electrode active material (60) comprising:
a first active material, wherein
the first active material includes secondary particles (10) each consisting of a plurality of primary particles (10P) aggregated together,
the first active material is a lithium-(transition metal) composite oxide represented by a formula (1):
LiₐNiₓCo_{y}Mn_{z}M_{(1-x-y-z)}O₂ (1)
where
x, y, z, and a satisfy 0.6≤x≤1.0, 0≤y≤0.3, 0≤z≤0.3, and 0.90≤a/(x+y+z)≤1.25, and
M is one or more elements selected from the group consisting of Mg, Ca, Al, Ti, V, Cr, Zr, Nb, Mo, Hf, Ta, and W, and
a ratio of the number of boundaries between the primary particles (10P) adjacent to each other in each secondary particle (10) at which crystal misorientation is 60° or more, relative to the number of the primary particles (10P) in the secondary particle (10), is 0.5 or less.

2. The positive electrode active material according to claim 1, wherein in the formula (1), x satisfies 0.7≤x≤1.0.

3. The positive electrode active material according to claim 1, wherein in the formula (1), x satisfies 0.9≤x≤1.0.

4. The positive electrode active material according to any one of claims 1 to 3, wherein in the formula (1), x, y, z, and a satisfy 1.06≤a/(x+y+z)≤1.25.1

5. The positive electrode active material according to any one of claims 1 to 3, wherein in the formula (1), x, y, z, and a satisfy 1.06≤a/(x+y+z)≤1.15.

6. The positive electrode active material according to any one of claims 1 to 5, wherein the secondary particle (10) has a porosity of 2 to 8%.

7. The positive electrode active material according to any one of claims 1 to 6, wherein the secondary particle (10) has a covering layer (12) including LiBO₂.

8. The positive electrode active material according to any one of claims 1 to 7, wherein the number of the primary particles (10P) in each secondary particle (10) is 10 or more.

9. The positive electrode active material according to any one of claims 1 to 8, wherein the first active material includes a particle group formed of the secondary particles (10).

10. The positive electrode active material according to any one of claims 1 to 9, wherein the primary particle (10P) has an aspect ratio of 1.9 or more.

11. The positive electrode active material according to any one of claims 1 to 10, wherein the primary particles (10P) have an average particle size of 0.1 to 2.5 µm.

12. The positive electrode active material according to any one of claims 1 to 11, wherein the first active material has an average particle size D50 of 2 to 50 µm.

13. A positive electrode plate comprising a positive electrode active material layer (22) including the positive electrode active material (60) according to any one of claims 1 to 12.

14. A non-aqueous electrolyte secondary battery (100) comprising the positive electrode plate (20) according to claim 13.
